**Europäisches Patentamt**

**European Patent Office**

**Office européen des brevets**

(11) Numéro de publication: **0 225 221**
**B1**

(12) **FASCICULE DE BREVET EUROPEEN**

(45) Date de publication du fascicule du brevet:
**18.01.89**

(51) Int. Cl.⁴: **B01J 8/44**, F23C 11/02

(21) Numéro de dépôt: **86402350.2**

(22) Date de dépôt: **20.10.86**

(54) **Dispositif pour l'alimentation des ouvertures d'une grille de fluidisation en gaz de décolmatage.**

(30) Priorité: **21.10.85 FR 8515580**

(43) Date de publication de la demande:
**10.06.87 Bulletin 87/24**

(45) Mention de la délivrance du brevet:
**18.01.89 Bulletin 89/3**

(84) Etats contractants désignés:
**AT BE CH DE ES FR GB GR IT LI LU NL SE**

(56) Documents cités:
**EP-A- 0 101 893**
**FR-A- 2 171 945**
**US-A- 4 308 806**
**US-A- 4 478 646**

(73) Titulaire: **CHARBONNAGES DE FRANCE, Etablissement public dit:, Tour Albert 1er 65 avenue de Colmar, F-92507 Rueil Malmaison Cédex(FR)**

(72) Inventeur: **Delebarre, Arnaud, 76 boulevard de la Liberté, F-59000 Lille(FR)**
Inventeur: **Witwicki, Paul Wladimir, Résidence de la Marne 42 rue de la Marne, Bethune-Chaumont F-62400 Bethune(FR)**

(74) Mandataire: **Chevallier, Robert Marie Georges et al, Cabinet BOETTCHER 23, rue La Boétie, F-75008 Paris(FR)**

ACTORUM AG

## Description

L'invention a pour objet un dispositif utilisable pour l'alimentation en gaz de décolmatage des ouvertures de soufflage de ce gaz à travers une grille de fluidisation.

Elle est applicable principalement aux grilles qui ont des ouvertures de soufflage d'air de fluidisation qui risquent d'être bouchées par la retombée des particules solides.

Elle est utilisable avec les grilles souvent appelées "plateaux de fluidisation", qui sont des grilles comprenant dans leur épaisseur des cavités évasées vers le haut, par exemple des troncs de pyramide ou des troncs de cône inversés, auxquels aboutissent des tubulures d'alimentation en gaz de fluidisation.

Pour obtenir un bon fonctionnement des lits fluidisés, il importe de respecter les deux conditions suivantes :
– obentir une répartition convenable du gaz de fluidisation, en principe une égale répartition, à travers les ouvertures de la grille,
– permettre après chaque arrêt de fluidisation la remise en fluidisation des particules solides et le dégagement des ouvertures de la grille, afin qu'après un arrêt, la remise en fluidisation du lit puisse se faire sans obstruction des tubulures individuelles d'air de fluidisation. Cette opération est appelée ici décolmatage.

Par le document FR-A 2 171 945, on connait un dispositif qui apporte une première solution de décolmatage; selon cette solution les ouvertures de soufflage sont alimentées par des tubulures individuelles qui comprennent chacune : une vanne de réglage du débit, une vanne d'arrêt, un diaphragme et un moyen de retenue des particules constitué par un siphon. Quand des particules se sont accumulées dans chaque siphon lorsque la vitesse du gaz de fluidisation est devenue insuffisante ou nulle, on les chasse par de l'air comprimé, la vanne d'arrêt étant alors fermée, ensuite l'air de fluidisation est à nouveau fourni aux ouvertures de soufflage.

Ce dispositif est efficace mais il a l'inconvénient d'être complexe et onéreux, puisqu'il faut installer autant de vannes, de diaphragmes et de siphons qu'il y a d'ouvertures dans la grille à alimenter.

Parfois, le moyen de retenue des particules qui tombent est constitué par au moins un coude composé d'une partie horizontale et d'une partie verticale de chaque tubulure. D'autres dispositions constructives peuvent servir à constituer un moyen d'arrêt de la chute des particules pendant les interruptions du fonctionnement.

On connait aussi, par la demande de brevet français n° 85 08320, déposée le 3 juillet 1985, un dispositif de décolmatage qui apporte une deuxième solution ne comprenant sur chaque tubulure individuelle ni vanne, ni diaphragme, ni siphon; un élément semi-perméable est placé dans la section droite de chacune des tubulures qui alimentent les ouvertures de soufflage de la grille. C'est une solution souvent satisfaisante, car plus simple et plus économique à installer que la précédente, cependant elle peut entraîner une perte de charge plus importante et accroître d'autant la dépense d'énergie pour le soufflage du gaz de fluidisation.

Le but principal de la présente invention est d'apporter un dispositif d'alimentation d'une grille de fluidisation en gaz de décolmatage qui évite à la fois la complexité de la première solution et les pertes de charge inhérentes à la deuxième solution mentionnées ci-dessus.

A cet effet, pour l'alimentation en gaz de décolmatage d'une grille supportant un lit de particules à fluidiser et ayant dans son épaisseur une pluralité d'ouvertures de soufflage de gaz de fluidisation réunies chacune à une tubulure correspondante d'arrivée de gaz de fluidisation pourvue d'un moyen d'arrêt de la chute des particules comprenant une partie tubulaire terminale dressée raccordée à une ouverture de soufflage, selon l'invention un tube d'injection d'un fluide de décolmatage est monté à l'intérieur de chaque partie tubulaire terminale dressée, ce tube d'injection étant susceptible d'être raccordé à volonté, à l'extérieur de ladite partie tubulaire terminale dressée, à une source de fluide de décolmatage.

Cette source de fluide de décolmatage peut être une source d'air comprimé ou de fluides divers tels que les suivants: oxygène, méthane, gaz naturel, gaz de cokerie, vapeur d'eau, eau, etc.

Le tube d'injection de l'invention peut avoir un orifice extrême, ou au moins un orifice latéral, ou encore un orifice extrême et au moins un orifice latéral. Quand il existe plusieurs orifices latéraux, ils peuvent être situés à un même niveau ou à des niveaux différents espacés sur la longueur du tube d'injection.

Il est possible de donner au tube d'injection une longueur lui permettant de s'étendre jusque dans l'ouverture d'air de soufflage de gaz de fluidisation prévue dans l'épaisseur de la grille.

Il est particulièrement avantageux, spécialement dans le cas d'une grille de fluidisation à troncs de pyramide ou à troncs du cône inversés s'élargissant vers le haut, de donner au tube d'injection une longueur telle qu'au moins un orifice de ce tube se trouve dans la zone qui s'étend entre la face supérieure de la grille de fluidisation et la limite inférieure utile du moyen d'arrêt de la chute des particules.

Il est courant avec certaines grilles de fluidisation qu'il existe dans la partie tubulaire dressée un tronçon de longueur limitée à section droite restreinte, juste avant le raccordement de cette partie tubulaire avec une ouverture correspondante de la grille. Dans ce cas, chaque tube d'injection est interrompu, de préférence, par une partie extrême supérieure située à l'intérieur de ce tronçon à section droite restreinte et ayant un orifice se trouvant à l'intérieur de ce même tronçon.

Selon un mode de réalisation préféré de l'invention, le tube d'injection a une extrémité supérieure obturée, c'est-à-dire dépourvue d'orifice extrême, et il existe au moins une rangée d'orifices latéraux située de préférence à proximité immédiate de cette extrémité supérieure obturée.

De préférence encore, les orifices latéraux ont une dimension, dans le sens de la dimension longitudinale du tube d'injection, qui est au plus égale à l'épaisseur de la paroi de ce tube.

Avec de tels tubes d'injection, disposés de préférence coaxialement aux ouvertures de la grille de fluidisation, on obtient sans difficulté le décolmatage ou le détassement des particules accumulées dans le moyen d'arrêt sans qu'il soit nécessaire de fermer l'arrivée du gaz de fluidisation. On peut donc supprimer les vannes individuelles qui existent habituellement sur la tubulure d'alimentation en gaz de fluidisation.

L'envoi du gaz de décolmatage dans tous les tubes d'injection est réalisable par une commande unique pour l'ensemble de la grille; en pratique on est conduit à installer seulement une ou deux vannes par grille, selon un schéma simple, ce qui est de réalisation peu onéreuse.

Le dispositif de l'invention est utilisable avec une large gamme de hauteurs du lit fluidisé. Il a été vérifié expérimentalement que la hauteur du lit n'a pratiquement pas d'influence sur le bon décolmatage réalisé à l'aide des tubes d'injection conformes à l'invention.

Afin de bien faire comprendre l'invention et d'en montrer d'autres caractéristiques, on décrira maintenant, à titre d'exemples non limitatifs, deux modes de réalisation de l'invention. On se reportera aux dessins annexés dans lesquels :

– la figure 1 est une vue schématique en coupe par un plan vertical d'une ouverture en tronc de pyramide renversée d'une grille de fluidisation alimentée par une tubulure à deux coudes successifs et terminée par une partie verticale équipée d'un dispositif selon l'invention,

– la figure 2 est une vue analogue à la figure 1 mais l'ouverture est alimentée par l'intermédiaire d'un siphon terminé par une partie verticale équipée d'un dispositif selon l'invention,

– la figure 3 est une vue de détail agrandie d'un orifice latéral d'un tube d'injection.

Un seul tronc de pyramide inversé faisant partie d'une grille de fluidisation 1 est représenté sur les deux figures.

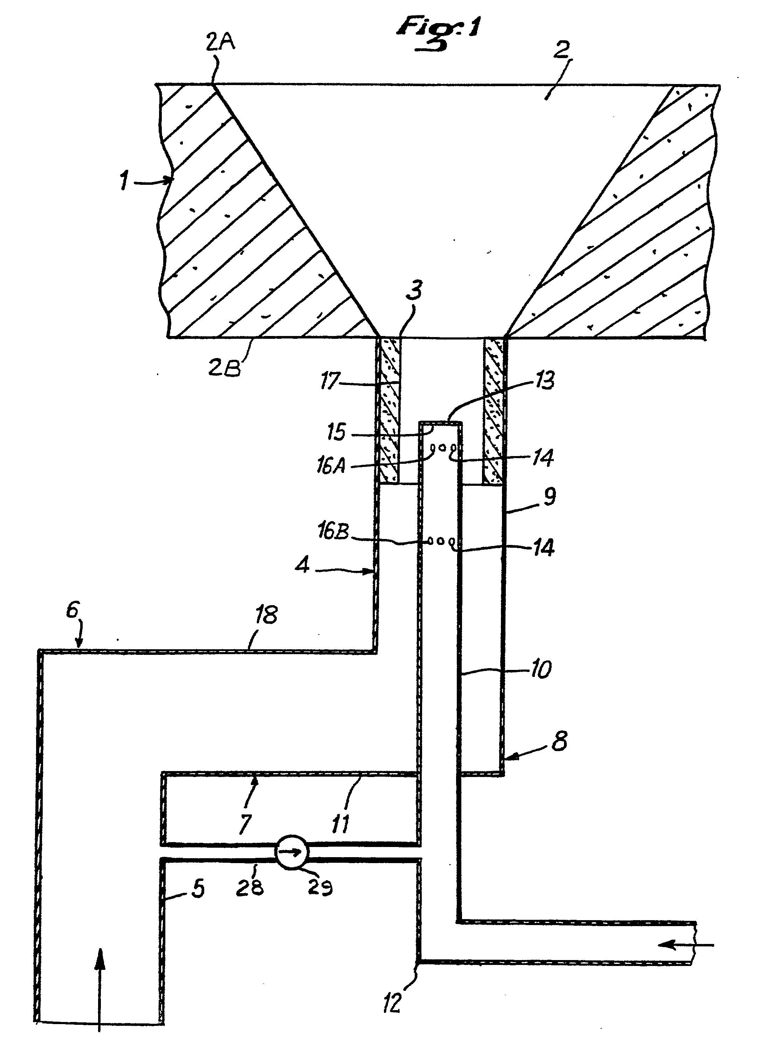

Dans le cas illustré par la figure 1, la grille 1 a une face supérieure 2A dans laquelle s'ouvre la grande base supérieure de chaque tronc de pyramide. Par exemple cette base peut être un carré de 215 mm de côté. Chaque tronc de pyramide inversé est une ouverture 2 réalisée dans l'épaisseur de la grille 1 pour s'ouvrir dans la face inférieure 2B de cette dernière par une entrée inférieure 3 ayant par exemple 34 mm de diamètre. La hauteur de chaque tronc de pyramide est de 120 mm.

L'alimentation en gaz de fluidisation se fait à l'aide d'un collecteur (non représenté) qui est raccordé à l'entrée inférieure 3 de chaque tronc de pyramide inversé par une tubulure 4. Celle-ci présente successivement à partir du collecteur une partie verticale 5, un premier coude 6 à 90°, une partie intermédiaire de liaison 7 généralement horizontale, un second coude 8 à 90°, une partie verticale terminale 9. Le second coude 8 composé de la partie horizontale 7 et de la partie verticale terminale 9 a pour rôle d'empêcher les particules solides de tomber jusque dans le collecteur pendant les interruptions du fonctionnement de l'installation de fluidisation. Ces particules s'accumulent dans le second coude 8 de chaque tubulure 4 et dans la partie verticale terminale 9.

Selon l'invention un tube d'injection 10 est monté à l'intérieur de la partie verticale terminale 9. Il est disposé de préférence verticalement et coaxialement dans cette partie verticale 9, avantageusement en traversant la paroi inférieure 11 de la tubulure 4 dans la région du second coude 8. A l'extérieur de la tubulure 4 le tube d'injection a lui-même un coude 12 pour se diriger vers une conduite (non représentée) qui est raccordée à une source d'air comprimé ou d'un autre gaz approprié de décolmatage.

Dans sa partie interne à la tubulure 4, le tube d'injection 10 se termine par une extrémité supérieure 13 et il présente dans sa paroi latérale plusieurs orifices latéraux 14. L'extrémité supérieure 13 pourrait être ouverte. Dans ce cas les particules qui descendent du lit fluidisé pendant les interruptions de fonctionnement pourraient entrer dans le tube d'injection 10, jusqu'à son coude 12, et en être chassées ensuite par l'air comprimé. Il est préférable de munir l'extrémité supérieure 13 d'une paroi d'obturation 15. Les orifices latéraux 14 sont disposés à des niveaux différents. Dans le présent exemple il existe deux rangées 16A, 16B, espacées en sens vertical, d'orifices latéraux 14.

Avec une partie verticale terminale 9 de la tubulure 4 ayant un diamètre intérieur de 68 mm et une hauteur entre l'entrée inférieure 3 et le second coude 8 de 400 mm, le tube d'injection 10 est avantageusement un tube de 13 mm de diamètre extérieur et de 8 mm de diamètre intérieur avec une première rangée 16A de 12 orifices latéraux de 2,5 mm de diamètre, espacés l'un de l'autre de 3 mm environ, à une distance de 10 mm en-dessous de l'extrémité supérieure 13. La seconde rangée 16B d'orifices latéraux 14 se trouve à 120 mm en-dessous de la première rangée 16A et elle comprend les mêmes orifices, en même quantité que cette première rangée 16A. Le fluide qui sort sous pression par ces orifices 14 a une direction initiale horizontale qui devient rapidement verticale.

Dans l'exemple décrit ici, le tube d'injection 10 ne dépasse pas l'entrée inférieure 3 des ouvertures prévues dans la grille de fluidisation. Dans d'autres circonstances, il est possible que le tube d'injection 10 pénètre par l'entrée inférieure 3 et s'étende dans l'ouverture de la grille 1 qui lui correspond.

Il existe habituellement dans la partie verticale terminale 9 de la tubulure 4 un rétrécissement de sa section droite, juste en amont de l'entrée inférieure 3, dans un tronçon 17 de longueur limitée, qui a, dans l'exemple décrit ici, un diamètre intérieur de 34 mm. Le tube d'injection 10 se termine à l'intérieur de ce tronçon 17 à diamètre réduit; son extrémité 13 obturée par la paroi 15 est située à 5 mm environ de l'entrée inférieure 3.

Les chiffres mentionnés ci-dessus ne sont donnés qu'à titre indicatif; cependant il est préférable que le tube d'injection 10 se termine à l'intérieur du tronçon 17 à diamètre réduit quand ce dernier existe afin que la rangée supérieure 16A d'orifices latéraux 14 se trouve aussi à l'intérieur de ce tronçon 17 à section droite réduite.

D'une façon plus générale, le tube d'injection 10 doit avoir une longueur telle qu'un orifice au moins puisse se trouver entre un niveau haut qui est celui de la face supérieure 2A de la grille de fluidisation 1 et un niveau bas qui est celui de la paroi supérieure 18 de la partie horizontale 7 faisant partie du coude 8 de la tubulure 4. Cette paroi supérieure 18 est appelée ici, dans l'esprit de l'invention, la limite inférieure utile du moyen d'arrêt constitué par le coude 8 parce que, en-dessous de cette paroi, le fluide de colmatage risque de s'engager dans la partie horizontale 7 et de ne plus avoir d'effet réel de décolmatage.

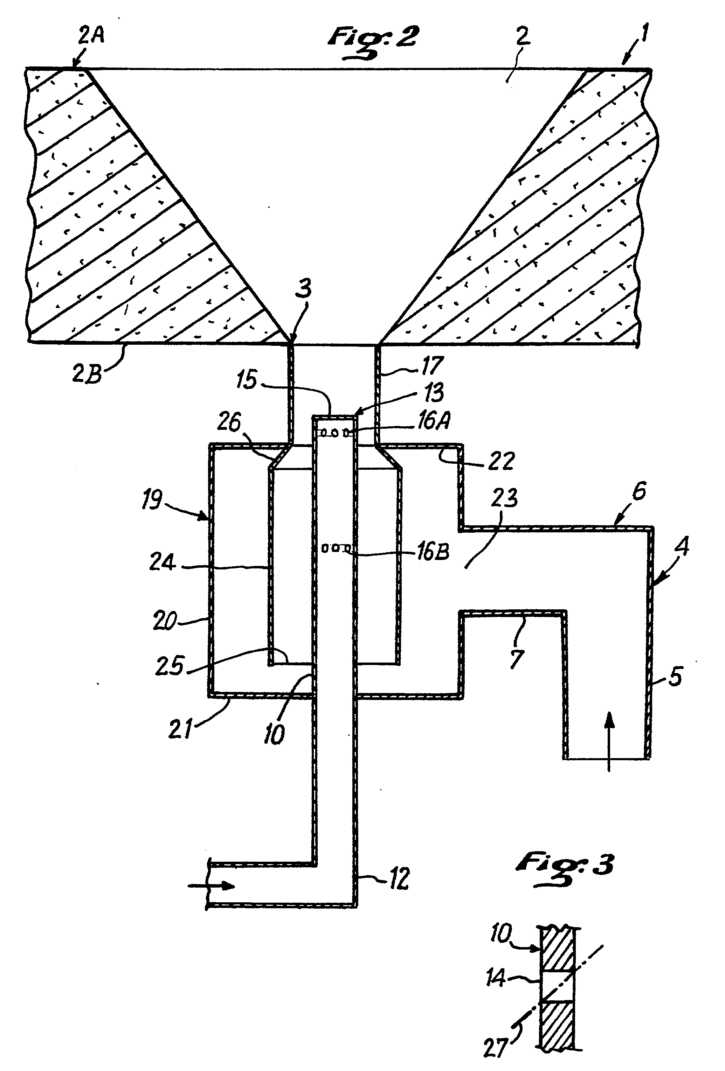

Dans l'exemple illustré par la figure 2, la descente des particules du lit fluidisé pendant les interruptions du fonctionnement est empêchée par un siphon désigné par la référence générale 19. Sur cette figure 2 les pièces identiques à celles de la figure 1 sont désignées par les mêmes références; on ne les décrira pas à nouveau. En pratique, ce siphon 19 remplace le second coude 8. Il comprend une enveloppe cylindrique 20 obturée à son extrémité inférieure par une paroi 21 et à son extrémité supérieure par une paroi 22; la partie horizontale 7 de la tubulure 4 débouche par une ouverture 23 dans la paroi latérale de cette enveloppe 20. Celle-ci contient coaxialement un tronçon vertical terminal 24 de diamètre plus petit qui atteint et traverse la paroi supérieure 22. Ce tronçon 24 commence par un bord inférieur 25 situé à un niveau intermédiaire entre la paroi inférieure 21 et le point le plus bas de l'ouverture 23 de la tubulure 4, ce qui fait apparaître l'effet de siphon. Le tronçon 24 est donc une cloison interne de siphon qui se termine par le bord inférieur 25. Ce dernier est la limite inférieure utile du siphon 19 pour le décolmatage réalisé par le dispositif de l'invention. Tout autre moyen d'arrêt des particules possède pareillement une limite inférieure utile.

A sa partie supérieure, le tronçon 24 diminue de section droite en 26 et traverse la paroi supérieure 22 pour constituer le tronçon 17 à section droite réduite qui aboutit à l'entrée inférieure 3 de la grille de fluidisation.

Le tube d'injection 10 est identique à celui qui a été décrit plus haut en référence à la figure 1. Il traverse la paroi inférieure 21 du siphon 19 et s'élève coaxialement à l'intérieur du tronçon 24 pour se terminer par son extrémité supérieure 13 obturée par la paroi 15. Cette extrémité supérieure 13 est située à l'intérieur du tronçon 17 à section droite réduite, en-dessous de l'entrée inférieure 3 de la grille de fluidisation.

Avec un siphon où le tronçon terminal vertical 24 joue le rôle de la partie verticale terminale 9 de l'exemple de la figure 1, le niveau haut où peut se trouver au moins un orifice du tube d'injection 10 est toujours la face supérieure 2A de la grille 1 et son niveau bas est le niveau du bord inférieur 25 de la cloison interne du siphon.

Quel que soit le moyen employé (un coude 8 ou un siphon 19) se raccordant à l'entrée inférieure 3 de la grille par une partie tubulaire terminale dressée, afin d'arrêter la chute des particules du lit fluidisé pendant les interruptions du fonctionnement, le tube d'injection 10 est toujours disposé à l'intérieur de cette partie tubulaire verticale et terminale de ce moyen, comme on l'a expliqué en détail, de préférence coaxialement à cette partie tubulaire terminale dressée et à l'ouverture correspondante de la grille.

Après un arrêt du fonctionnement, pour recréer le lit fluidisé au-dessus de la grille, il suffit d'alimenter en une seule manœuvre tous les tubes d'injection 10 en air comprimé et de mettre en service l'alimentation en gaz de fluidisation des tubulures 4.

Bien que chaque tube d'injection 10 puisse avoir un orifice extrême pour le passage du gaz de décolmatage, il est préférable d'utiliser des orifices latéraux 14. Il est préférable aussi, comme le montre la figure 3, de donner à chaque orifice latéral 14 un diamètre qui est au plus sensiblement égal à l'épaisseur de la paroi du tube d'injection 10. On a constaté en pratique qu'une telle mesure a pour effet que l'angle de talus indiqué par un trait mixte 27 empêche les particules de pénétrer à l'intérieur du tube d'injection 10. Cet angle de talus est celui des particules qui descendent et s'accumulent dans l'espace annulaire autour du tube d'injection 10.

Les mots "horizontal" et "vertical" ont été utilisés au cours de la description pour la facilité de celle-ci. Ils n'impliquent pas une position rigoureuse des pièces auxquelles ils sont appliqués. Ces pièces peuvent avoir une direction réelle s'écartant de l'horizontalité et de la verticalité parfaites.

On a représenté sur la figure 1 seulement une variante de réalisation selon laquelle il existe une tubulure supplémentaire 28 qui réunit la tubulure 4, en dessous de son coude 6, au tube d'injection 10 au-dessus de son coude 12. Sur cette tubulure 28 est monté un clapet anti-retour 29. Ce dernier permet au gaz de fluidisation d'entrer dans le tube d'injection 10 mais il s'oppose au passage dans la tubulure 4 de l'air comprimé venant par le tube d'injection 10.

Cette variante est utile quand le lit fluidisé contient beaucoup de particules très fines qui ne s'accumulent pas en faisant un talus dans les orifices 14 mais qui pénètrent dans le tube d'injection 10.

Au démarrage, on laisse arriver en premier le gaz de fluidisation dans la tubulure 4; il ne chasse pas les poussières accumulées mais il passe entre les particules et il établit une pression égale dans la tubulure 4 et dans le tube d'injection. Cette égalisation des pressions facilite l'action de l'air comprimé que l'on fait arriver ensuite par le tube d'injection 10.

**Revendications**

1. Dispositif de décolmatage des tubulures (4) d'alimentation en gaz de fluidisation d'une grille (1) supportant un lit de particules à fluidiser, cette grille (1) ayant des ouvertures de soufflage ayant chacune une entrée inférieure (3) raccordée à une arrivée de gaz de fluidisation par l'intermédiaire d'une tubulure (4) comprenant un moyen d'arrêt (8, 19) de la chute desdites particules pendant les interruptions de fonctionnement, ce moyen ayant une partie tubulaire terminale dressée (9, 24) réunie à une entrée inférieure (3) correspondante, caractérisé en ce qu'un tube d'injection (10) d'un fluide de décolmatage est monté à l'intérieur de ladite partie tubulaire terminale dressée (9, 24), ce tube d'injection (10) étant susceptible d'être raccordé à volonté, à l'extérieur de cette partie terminale dressée (9, 24), à une source de fluide de décolmatage.

2. Dispositif selon la revendication 1, caractérisé en ce que le tube d'injection (10) a au moins un orifice (14) de sortie du fluide de décolmatage situé dans une zone qui s'étend entre la face supérieure (2A) de la grille de fluidisation (1) et la limite inférieure utile (18, 25) du moyen d'arrêt (8, 19) de la chute des particules.

3. Dispositif selon la revendication 2 utilisé avec un moyen d'arrêt des particules constitué par un coude (8) ayant une partie horizontale (7) avec une paroi supérieure (18), caractérisé en ce que la limite inférieure utile est constituée par ladite paroi supérieure (18).

4. Dispositif selon la revendication 2 utilisé avec un moyen d'arrêt des particules constitué par un siphon (19) ayant une cloison interne de siphon (24) à bord inférieur (25) caractérisé en ce que la limite inférieure utile est constituée par ledit bord inférieur (25).

5. Dispositif selon la revendication 1, caractérisé en ce que l'extrémité supérieure (13) du tube d'injection (10) est obturée et il existe au moins une rangée circulaire (16A) d'orifices latéraux (14).

6. Dispositif selon la revendication 1 utilisé avec un moyen d'arrêt des particules dans lequel la partie tubulaire terminale dressée (9, 24) comprend un tronçon (17) à section droite réduite se raccordant avec l'entrée inférieure (3) d'une ouverture correspondante de la grille (1) caractérisé en ce qu'au moins un orifice (14) et de préférence une rangée circulaire (16A) d'orifices (14) se trouvent à l'intérieur dudit tronçon (17) à section droite réduite.

7. Dispositif selon la revendication 6, caractérisé en ce que le tube d'injection (10) a deux rangées circulaires (16A, 16B) d'orifices latéraux (14) espacées dans le sens longitudinal de ce tube (10), la rangée supérieure (16A) étant située dans le tronçon (17) à section droite réduite et la rangée inférieure (16B) étant située en-dessous de ce même tronçon (17).

8. Dispositif selon l'une quelconque des revendications 1 à 7, caractérisé en ce que, quand le tube d'injection (10) est pourvu d'un ou de plusieurs orifices latéraux (14), ce ou ces orifices ont une dimension dans le sens longitudinal de ce tube d'injection (10) qui est au plus égale à l'épaisseur de la paroi de ce même tube (10).

9. Dispositif selon la revendication 5 caractérisé en ce qu'il existe entre la tubulure (4) et le tube d'injection (10) une tubulure supplémentaire (28) qui les relie directement et sur laquelle est monté un clapet anti-retour (29) s'opposant au passage du fluide de décolmatage vers ladite tubulure (4).

**Patentansprüche**

1. Vorrichtung zum Verstopfungsfreimachen der Rohrstutzen (4), die mit Wirbelbettgas ein Gitter (1) beaufschlagen, das ein Bett aus zu fluidisierenden Partikeln trägt, wobei das Gitter (1) Blasöffnungen, je mit einem unteren Eintritt (3) versehen, aufweist, der mit einer Wirbelgaszufuhr über einen Rohrstutzen (4) verbunden ist und ein Mittel (8, 19) zur Unterbindung des Falls der Partikel während der Betriebsunterbrechungen umfaßt, wobei dieses Mittel einen gerichteten röhrenförmigen Endteil (9, 24) aufweist, der mit einem entsprechenden unteren Ende (3) vereinigt ist, dadurch gekennzeichnet, daß ein Einführungsrohr (10) eines von Verstopfungen freimachenden Fluids im Inneren dieses röhrenförmigen gerichteten Endteils (9, 24) eingebaut ist, wobei dieses Einführungsrohr (10) in der Lage ist, auf Wunsch außerhalb dieses gerichteten Endteils (9, 24) mit einer von Verstopfungen freimachenden Fluidquelle verbunden zu werden.

2. Vorrichtung nach Anspruch 1, dadurch gekennzeichnet, daß das Einführungs- oder Einblasrohr (10) über wenigstens eine Austrittsöffnung (14) für das von Verstopfungen freimachende Fluid verfügt, die in einer Zone angeordnet ist, die sich zwischen der Oberseite (2A) des Wirbelbettgitters (1) und der unteren nutzbaren Begrenzung (18, 25) der den Fall der Partikel unterbindenden Einrichtung (8, 19) erstreckt.

3. Vorrichtung nach Anspruch 2, verwendet mit einer die Partikel aufhaltenden Einrichtung, die durch einen Krümmer (8) gebildet ist, der über einen horizontalen Teil (7) mit einer oberen Wandung (18) verfügt, dadurch gekennzeichnet, daß die untere nützliche Begrenzung gebildet wird durch diese obere Wandung (18).

4. Vorrichtung nach Anspruch 2, verwendet mit einer partikelaufhaltenden Einrichtung, gebildet durch einen Siphon (19) mit einer inneren Siphontrennwand (24) mit unterem Rand (25), dadurch gekennzeichnet, daß die untere nützliche Begrenzung durch diesen unteren Rand (25) gebildet ist.

5. Vorrichtung nach Anspruch 1, dadurch gekennzeichnet, daß das obere Ende (13) des Einführungs- oder Einblasrohres (10) verschlossen ist und wenigstens eine kreisförmige Reihe (16A) seitlicher Öffnungen (14) vorgesehen ist.

6. Vorrichtung nach Anspruch 1, verwendet mit einer partikelaufhaltenden Einrichtung, bei der der rohrförmige gerichtete Endteil (9, 24) ein Stück (17) mit reduziertem Querschnitt aufweist, der mit dem unteren Eintritt (3) einer entsprechenden Öffnung des Gitters (1) verbunden ist, dadurch gekennzeichnet, daß wenigstens eine Öffnung (14) und vorzugsweise eine kreisförmige Reihe (16A) von Öffnungen (14) sich innerhalb dieses Stücks (17) geraden reduzierten Querschnitts befindet.

7. Vorrichtung nach Anspruch 6, dadurch gekennzeichnet, daß das Einführungs- oder Einblasrohr (10) über zwei kreisförmige Reihen (16A, 16B) seitlicher Öffnungen (14) verfügt, die in Längsrichtung dieses Rohres (10) unter Abstand angeordnet sind, wobei die obere Reihe (16A) in dem Stück mit vermindertem Querschnitt und die untere Reihe (16B) unterhalb eben dieses Stücks (17) angeordnet ist.

8. Vorrichtung nach einem der Ansprüche 1 bis 7, dadurch gekennzeichnet, daß dann, wenn das Einführungs- oder Einblasrohr (10) mit einer oder mehreren seitlichen Öffnungen (14) versehen ist, diese Öffnung oder diese Öffnungen über eine Abmessung in Längsrichtung dieses Einführungs- oder Einblasrohres (10) verfügen, die höchstens gleich der Dicke der Wandung eben dieses Rohres (10) ist.

9. Vorrichtung nach Anspruch 5, dadurch gekennzeichnet, daß zwischen dem Rohrstutzen (4) und dem Einführungs- oder Einblasrohr (10) ein zusätzlicher Rohrstutzen (28) vorgesehen ist, der sie direkt verbindet und an dem ein Rückschlagventil (29) angebracht ist, das sich dem Durchgang des von Verstopfungen freimachenden Fluids gegen diesen Rohrstutzen (4) widersetzt.

## Claims

1. An arrangement for unblocking the pipes (4) for the feed of fluidisation gas of a grid (1) supporting a bed of particles to be fluidised, said grid (1) haviang blowing openings which each have a lower entry (3) connected to a fluidisation gas delivery by way of a pipe (4) comprising a means (8, 19) for stopping said particles from dropping down during interruptions in operation, said means having an upright terminal tubular part (9, 24) connected to a corresponding lower entry (3), characterised in that a tube (10) for injection of an unblocking fluid is mounted within said upright terminal tubular part (9, 24), said injection tube (10) being capable of being connected as desired, outside said upright terminal part (9, 24), to a source of unblocking fluid.

2. An arrangement according to claim 1 characterised in that the injection tube (10) has at least one orifice (14) for discharge of the unblocking fluid which is disposed in a zone extending between the upper face (2A) of the fluidisation grid (1) and the lower useful limit (18, 25) of the means (8, 19) for preventing the particles from dropping down.

3. An arrangement according to claim 2 with is used with a means for stopping the particles dropping down formed by an elbow bend (8) having a horizontal part (7) with an upper wall (18) characterised in that the lower useful limit is formed by said upper wall (18).

4. An arrangement according to claim 2 used with a means for stopping the particles formed by a siphon (19) having an internal siphon partition (24) with a lower edge (25) characterised in that the lower useful limit is formed by said lower edge (25).

5. An arrangement according to claim 1 characterised in that the upper end (13) of the injection tube (10) is closed and there is at least one circular row (16A) of lateral orifices (14).

6. An arrangement according to claim 1 used with a means for stopping the particles in which the upright terminal tubular part (9, 24) comprises a portion (17) of reduced cross section which connects to the lower entry (3) of a corresponding opening of the grid (1) characterised in that at least one orifice (14) and preferably a circular row (16A) of orifices (14) is disposed within said portion (17) of reduced cross section.

7. An arrangement according to claim 6 characterised in that the injection tube (10) has two circular rows (16A, 16B) of lateral orifices (14), which rows are spaced in the longitudinal direction of said tube (10), the upper row (16A) being disposed in the portion (17) of reduced cross section and the lower row (16B) being disposed below said portion (17).

8. An arrangement according to any one of claims 1 to 7 characterised in that, when the injection tube (10) is provided with one or more lateral orifices (14), said orifice or orifices is or are of a dimension in the longitudinal direction of said injection tube (10) which is at most equal to the thickness of the wall of said tube (10).

9. An arrangement according to claim 5 characterised in that between the pipe (4) and the injection tube (10) there is an additional pipe (28) which connects them directly and on which there is disposed a non-return valve (29) for preventing the unblocking fluid from flowing towards said pipe (4).

*Fig.1*

*Fig. 2*

*Fig. 3*